# FASCICULE DE BREVET EUROPEEN

(11) **EP 0 524 305 B1**
(45) Date de publication et mention de la délivrance du brevet: **16.08.1995**
(21) Numéro de dépôt: 92906549.8
(22) Date de dépôt: 11.02.1992
(51) Int. Cl.: G01S 17/87

(54) **DISPOSITIF OPTIQUE DE DETERMINATION DE LA POSITION RELATIVE DE DEUX VEHICULES ET SYSTEME D'ALIGNEMENT EN COMPORTANT APPLICATION**
Optisches Gerät zur Bestimmung der relativen Position von zwei Fahrzeugen und dessen Anwendung in einem Ausrichtungssystem
OPTICAL DEVICE FOR DETERMINING THE RELATIVE POSITION OF TWO VEHICLES AND APPLICATION TO AN ALIGNMENT SYSTEM

(30) Priorité: 12.02.1991 FR 9101608
(43) Date de publication de la demande: 27.01.1993
(73) Titulaire: MATRA MARCONI SPACE FRANCE, 75116 Paris (FR)
(72) Inventeur: TULET, Michel, F-31130 Balma (FR)
(74) Mandataire: Fort, Jacques
(86) Numéro de dépôt international: FR9200122
(87) Numéro de publication internationale: WO9214168

(56) Documents cités:
- EP-A- 0 254 634
- WO-A-87/02797
- US-A- 4 709 580
- SENSOR AND ACTUATORS. vol. 17, no. 3/4, 17 Mai 1989, LAUSANNE CH pages 329 -338; SCHROER ET AL: 'Optical sensors for position measurements'
- NTIS TECH NOTES. 1 Novembre 1989, SPRINGFIELD, VA US, page 956; 'Alignment system for docking control'

## Description

L'invention a pour objet un dispositif optique de détermination de la position relative de deux véhicules dont l'un porte une installation active et qu'on appelera ci-après "chasseur" et dont l'autre, qui porte des repères passifs au cours de la détermination, sera appelé "cible". Elle trouve une application particulièrement importante, bien que non exclusive, dans le domaine de la mesure de la distance, de la position et/ou de l'orientation de la cible par rapport au chasseur, notamment pour permettre le rendez-vous et l'accostage de deux véhicules spatiaux.

On connaît déjà (EP-A-0 254 634) un dispositif de détermination de la distance et de l'attitude relative d'un chasseur et d'une cible comprenant, sur le chasseur, une caméra de formation de l'image d'un champ de vision ayant un développement angulaire déterminé et, sur la cible, un jeu de plusieurs repères dont l'écartement est tel qu'ils sont contenus dans le champ angulaire lorsque la distance entre le chasseur et la cible est important et que le champ de la caméra est correctement centré par rapport à la cible.

Un tel dispositif de mesure, dans lequel les repères sont généralement constitués par des réflecteurs répartis suivant un motif géométrique déterminé, éclairés par une source impulsionnelle de lumière portée par le chasseur, permet de déterminer la distance entre chasseur et cible par mesure du temps aller-retour de la lumière et permet de déterminer l'attitude de la cible par rapport au chasseur, à relativement courte distance, par comparaison de l'image obtenue avec le motif connu de répartition des repères.

La mesure du désalignement et de l'attitude relative devient extrêmement difficile dès que la distance entre chasseur et cible est inférieure à un seuil. La raison en est double. D'une part, la focalisation de l'image sur le détecteur, généralement constitué par une caméra à matrice de capteurs, se dégrade dès que la distance entre chasseur et cible devient faible. De plus, l'écartement angulaire entre les repères tend à dépasser le champ angulaire du détecteur en dessous du seuil.

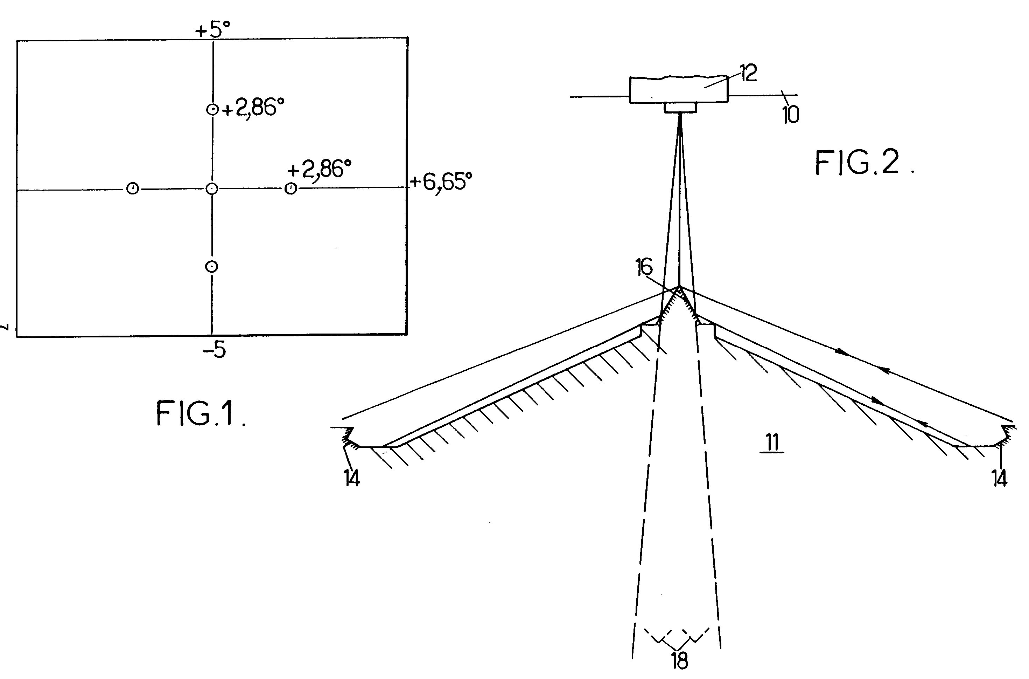

A titre d'exemple, la figure 1 montre le champ de vision d'un détecteur qu'on peut considérer comme représentatif, ayant un développement angulaire de 10° dans un sens et de 13,3° dans l'autre. Un motif constitué par des réflecteurs répartis aux coins et au centre d'une pyramide à base carrée, avec une largeur de base de 10 cm, apparaît dans le champ sous la forme montrée en figure 1 à une distance de 1 mètre. Au-dessous de 0,43 m de distance, il devient impossible de conserver tous les repères dans le champ, même en l'absence de dépointage.

Un autre problème est constitué par l'impossibilité de donner à la caméra une optique conservant la mise au point depuis l'infini jusqu'à une distance très faible. Dans la pratique, la dégradation de la focalisation au-dessous de 50 cm de distance entre le détecteur et la cible se traduit par une tache de diamètre important en nombre de pixels dans l'image fournie par la caméra. Pour une caméra à matrice de capteurs à couplage de charges ou CCD de type couramment utilisé, avec les paramètres indiqués plus haut, la tache de focalisation a un diamètre de 9 pixels dès une distance de 50 cm.

L'idée qui vient à l'esprit pour écarter les problèmes ci-dessus consiste à prévoir, sur la cible, plusieurs motifs constitués chacun de rétroréflecteurs ayant un diamètre optimisé pour tenir compte du champ angulaire correspondant à un pixel et de la difraction. Cela conduit par exemple à prévoir plusieurs motifs ayant des diamètres élémentaires de :
- 50 cm pour les distances de 100 m à 1 km,
- 12 cm pour les distances de 10 m à 200 m,
- 1,2 cm pour les distances de 2 m à 20 m,
- 5 mm pour les distances de 0,5 à 4 m.

Cette mesure ne résoud cependant en rien le problème lié à la défocalisation qui interdit pratiquement des mesures utilisables au-dessous de 50 cm environ. Le calcul de l'emplacement du barycentre de la tache provoquée par la défocalisation devient en effet très complexe.

L'invention vise notamment à autoriser un fonctionnement satisfaisant du dispositif optique pour des écartements entre chasseur et cible plus faibles que l'écartement admissible avec les dispositifs actuels.

Dans ce but, l'invention propose un dispositif caractérisé en ce que les repères ont un écartement tel qu'ils sont au moins partiellement hors du champ angulaire de vision de la caméra portée par le chasseur dès que la distance entre le chasseur et la cible est inférieure à une valeur déterminée et en ce que la cible porte des moyens réflecteurs qui restent entièrement dans le champ de vision, même au-dessous de ladite valeur déterminée de distance, et sont agencés pour fournir, dans le champ de vision de la caméra, une image des repères.

Cette disposition permet de donner à la distance réelle ou physique entre la caméra et les repères une distance qui reste importante, même lorsque la cible et le chasseur sont très proches, tout en autorisant un champ angulaire faible de la caméra.

Dans la pratique, les moyens réflecteurs seront généralement constitués par une pyramide réfléchissante placée au centre du motif et présentant trois ou quatre faces, suivant le nombre de repères. Ces repères seront généralement des rétroréflecteurs, tels que des coins de cube, placés à une distance de la pyramide qui est avantageusement d'au moins 50 cm.

On voit qu'on supprime ainsi le problème de la défocalisation, les chemins optiques entre caméra et repères étant toujours supérieurs à l'écartement entre moyens réflecteurs et repères. De plus, le dispositif suivant l'invention permet de donner au motif une forme qui épouse la géométrie de la cible : les faces réfléchissantes de la pyramide peuvent être ajustées pour s'adapter aux possibilités d'implantation sur la cible.

Suivant un autre aspect de l'invention, celle-ci vise à résoudre un problème particulier au cas des véhicules spatiaux ayant des accès d'amarrage ou "docking ports" accouplables et situés dans leur partie centrale. Jusqu'ici, l'alignement relatif des accès s'est effectué en utilisant un dispositif de détermination dont les repères sont répartis suivant un motif placé au bord de la cible. Une telle disposition se traduit par des erreurs importantes : en effet, une erreur d'alignement de 0,2° et un excentrement maximal de 2 m se traduisent par une erreur de mise en place du centre de l'accès d'amarrage de 7 mm suivant chaque axe. Au surplus, les dilatations différentielles éventuelles se traduisent également par des erreurs d'alignement importantes.

Pour écarter ce problème, l'invention propose un système comportant deux dispositifs du type ci-dessus défini, décalés angulairement autour de l'axe des accès.

L'invention sera mieux comprise à la lecture de la description qui suit de modes particuliers de réalisation, décrits à titre d'exemples non limitatifs. La description se réfère aux dessins qui l'accompagnent, dans lesquels :
- la figure 1, déjà mentionnée, montre le champ de vision d'un détecteur représentatif et l'image d'un motif déterminé, à une base carrée, à une distance d'1 m ;
- la figure 2 est un schéma montrant la disposition relative de moyens réflecteurs et de repères sur la cible, dans un dispositif suivant l'invention ;
- la figure 3 montre la variation du domaine de mesure en fonction de la distance entre caméra et motif de la cible (le sommet du motif étant pris comme référence) pour plusieurs modes de réalisation ;
- la figure 4 montre la répartition d'éclairement dans le cas de moyens réflecteurs constitués par une pyramide à base carrée ;
- la figure 5 est constituée par des courbes faisant apparaltre le dépointage autorisé en fonction de la distance, pour une largeur de base particulière d'une pyramide d'éclatement de faisceaux constituant les moyens réflecteurs ;
- la figure 6 montre schématiquement une implantation possible de deux motifs et de moyens réflecteurs sur une cible munie d'un accès d'amarrage ;
- la figure 7 est un schéma de principe d'un dispositif permettant la détermination de l'attitude différentielle d'un chasseur et d'une cible placés à proximité l'un de l'autre.
- la figure 8 montre schématiquement un détail du dispositif de la figure 7 ;
- la figure 9 montre la variation de l'angle de vue de motifs portés par la cible et le chasseur, dans le dispositif de la figure 7, en fonction de la distance ; et
- la figure 10 est un schéma montrant un exemple d'image des repères dans le champ de la caméra.

Dans un dispositif suivant l'invention ayant la disposition de principe montrée en figure 2, le chasseur 10 porte encore une caméra 12, telle qu'une caméra CCD, munie d'un dispositif d'éclairement coaxial non représenté. La cible 11 porte des repères 14 constitués par des coins de cube rétroréflecteurs disposés suivant un motif déterminé, souvent aux quatre coins d'un carré. La cible 11 porte également des moyens réflecteurs 16, représentés sous forme d'une pyramide à faces réfléchissantes orientées de façon que, lorsque la caméra 12 est centrée par rapport au motif, l'image des repères 14 soit centrée dans le champ, comme indiqué en 18 sur la figure 2.

Les moyens réflecteurs 16 peuvent être regardés comme un éclateur de faisceau d'illumination et un collecteur des faisceaux restitués par les repères, permettant de définir une cible virtuelle ayant une base étroite (par exemple 1 cm de façon à autoriser une distance minimale entre caméra et cible d'environ 10 cm) tout en évitant une défocalisation excessive.

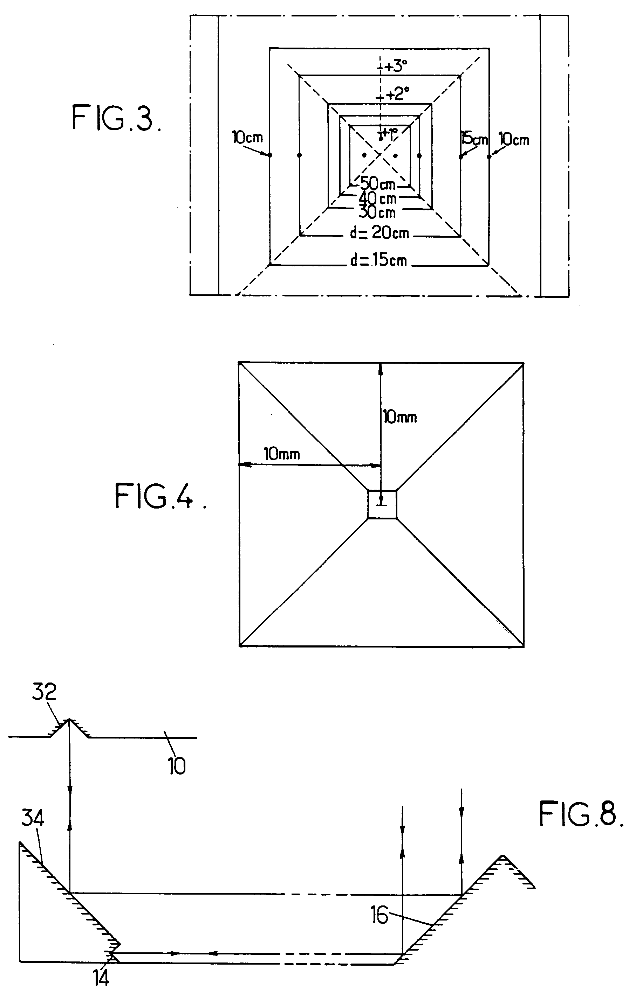

La figure 3 montre, à titre d'exemple, les domaines d'éclairement et de mesure en fonction de la distance entre la caméra et le centre du motif des repères, pris comme référence, dans le cas d'un éclateur de faisceau formé par une pyramide ayant les dimensions montrées sur la figure 4, placé de façon que le motif ait 1 cm de largeur de base virtuelle. Les indications numériques d indiquent les distances.

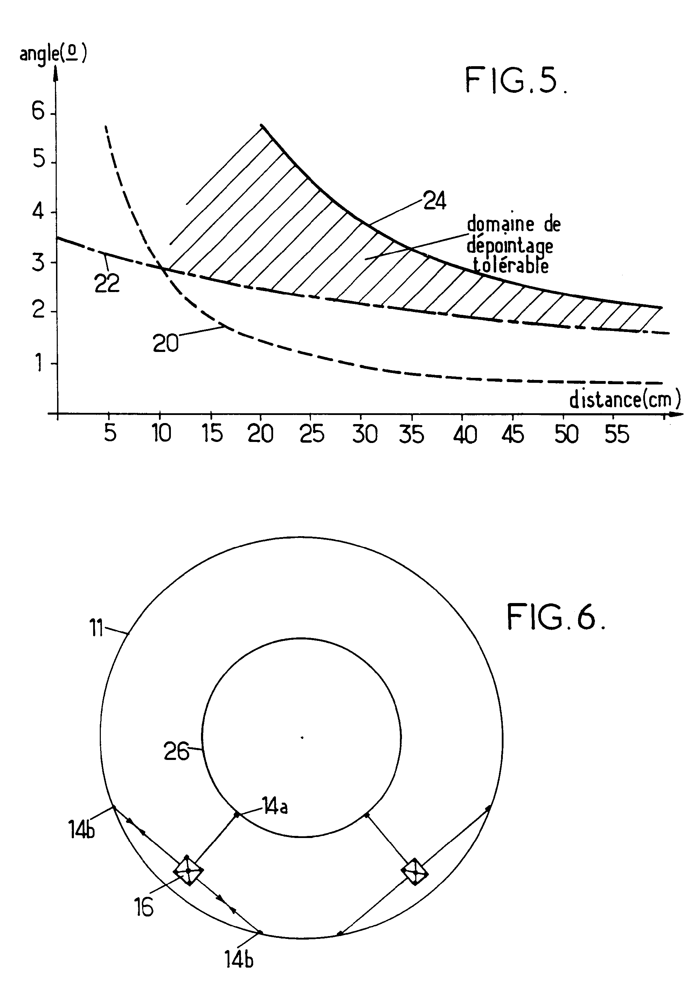

L'intérêt de l'invention apparaît sur la figure 5. La courbe en tirets 20 de cette figure montre l'angle de mesure d'un dispositif classique, pour un motif de base égal à 0,5 cm, jusqu'à une distance de 60 cm. Pour la même caméra, la courbe 22 en traits mixtes indique l'angle mesuré pour un motif ayant 6 cm de base, reculé de 50 cm grâce à l'emploi d'un éclateur de faisceau. Enfin, la courbe en traits pleins 24 montre le dépointage maximum autorisé dans ce cas, avec un éclateur de faisceau constitué par une pyramide ayant 6 cm de largeur à la base. On voit que ce dispositif suivant l'invention permet de tolérer un dépointage qui, même à 50 cm, reste supérieur à 0,6° et qui augmente lorsque la distance diminue. On voit aussi qu'il est possible d'utiliser des repères constitués par des coins cube de forte dimension, plus élevée que dans le cas illustré par la courbe 20, ce qui facilite la mesure.

Des courbes similaires aux courbes 22 et 24 peuvent être tracées pour d'autres paramètres, par exemple pour une cible virtuelle de 2 cm de largeur de base, encore éloignée de 50 cm, et un éclateur de faisceau constitué par une pyramide de 2 cm de largeur de base, qui autorise encore un dépointage toujours supérieur à 0,6° entre 10 cm et 50 cm de distance.

Comme on l'a indiqué plus haut, l'invention est notamment utilisable sur un véhicule chasseur et un véhicule cible munis d'accès d'amarrage qui doivent être amenés en coïncidence. Comme le montre la figure 6, l'accès 26 est généralement placé suivant l'axe du véhicule. Une solution avantageuse consiste dans ce cas à prévoir deux dispositifs optiques distincts ayant la même constitution. Chacun comporte une caméra placée sur le chasseur et, sur la cible, un ensemble constitué de repères et de moyens réflecteurs. Les deux dispositifs sont décalés, habituellement de 90°, l'un par rapport à l'autre autour de l'axe du véhicule cible, à aligner avec l'axe du véhicule chasseur lors de l'accostage, chaque dispositif peut avoir trois repères ayant la disposition montrée en figure 6. Sur cette figure, le repère central 14a est placé au bord de l'accès d'amarrage 26 et les deux autres repères 14b sont placés au bord du véhicule cible. Les moyens réflecteurs 16 sont constitués par une pyramide à faces réfléchissantes située à égale distance des trois repères, au milieu de l'intervalle qui sépare les repères 14b.

D'autres configurations, utilisant trois repères ou quatre repères par dispositif, sont possibles.

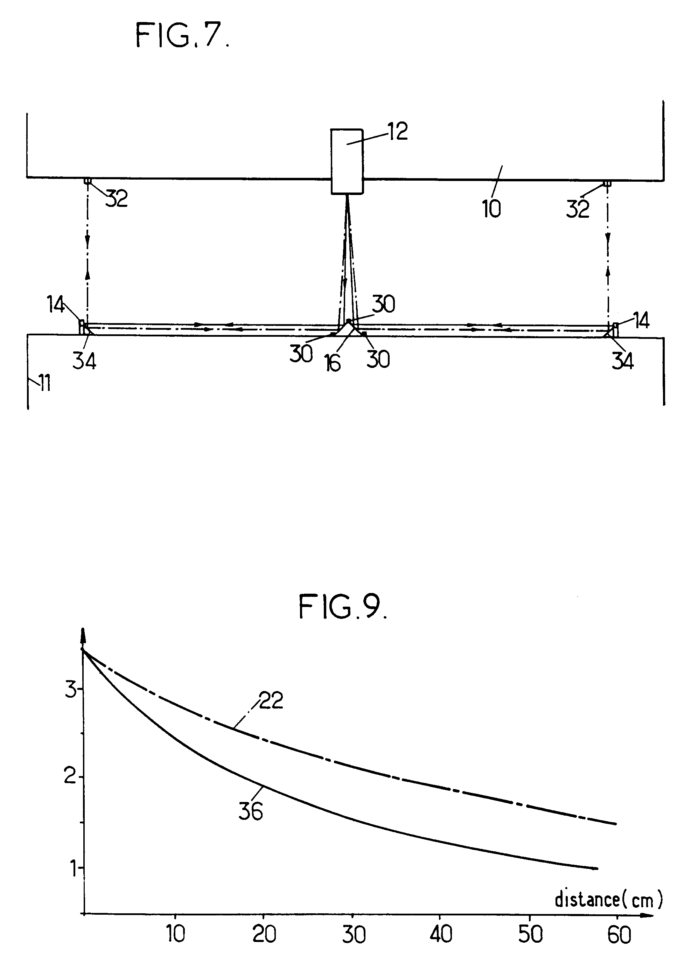

L'utilisation d'un dispositif permettant de disposer d'une base de mesure importante résoud le problème de la défocalisation et celui du champ angulaire limité. Lorsqu'il est nécessaire de mesurer des défauts d'alignement entre caméra et moyens réflecteurs de façon précise, on peut avantageusement utiliser la disposition qui sera maintenant décrite et dont un mode de réalisation est schématisé en figure 7.

Le dispositif ou chaque dispositif comporte alors, en plus des repères 14 (schématisés par de simples points sur la figure 7) et des moyens réflecteurs 16, un ensemble optique supplémentaire constitué de façon que son image se superpose à celle des repères 16 portés par le véhicule cible lorsque l'alignement est réalisé. Des repères supplémentaires 30, suffisamment rapprochés pour être directement dans le champ de la caméra au-delà d'une distance déterminée, peuvent également être prévus sur la cible. Ils sont formés par exemple par des rétroréflecteurs montés au sommet et aux angles de la base de la pyramide constituant les moyens réflecteurs.

Dans le cas de la figure 7, l'ensemble supplémentaire comporte des repères auxiliaires 32 montés sur le véhicule chasseur suivant un motif de répartition qui reproduit celui des repères 14. Des miroirs 34, associés chacun à un des repères 14, sont prévus pour renvoyer une partie du faisceau d'illumination vers le chasseur et ramener l'image du repère auxiliaire 32 correspondant vers la caméra 12. Chacun des repères auxiliaires 32 peut être constitué par un coin de cube, comme les repères 14.

On peut ainsi contrôler l'alignement de la cible et du chasseur, et mesurer l'amplitude et le sens d'un défaut d'alignement éventuel. En effet les images des repères 14 et celles des repères 32, qui constituent les uns et les autres un motif à large base, donc autorisent une mesure précise, se superposent sur la caméra. Des circuits classiques d'écartométrie peuvent être associés à la caméra 12 pour déterminer, à partir de l'écart entre les images des repères 14 et des repères auxiliaires 32, les défauts d'alignement et les erreurs d'indexage en rotation.

Suivant que l'on souhaite seulement une possibilité de mesure pour des distances faibles entre chasseur et cible, ou au contraire la possibilité d'effectuer des mesures de distance et d'alignement sur un intervalle de distance important, on donnera des dimensions faibles ou importantes aux moyens réflecteurs 16 et aux miroirs 34.

Le choix des dimensions optimales suivant le résultat recherché peut s'effectuer par un calcul simple. La figure 8 montre une disposition possible, correspondant à une plage de distances de mesure importante, conduisant à des dimensions de miroir 34 nettement plus importantes que celles du repère 14.

A titre indicatif la figure 9 montre, pour la même largeur de base que celle correspondant à la courbe 22 de la figure 5, les variations, en fonction de la distance, de l'angle sous lequel apparaissent, en l'absence de dépointage, les repères 14 de la cible (courbe 22 en tirets) et les repères 32 du chasseur (courbe 36 en traits pleins).

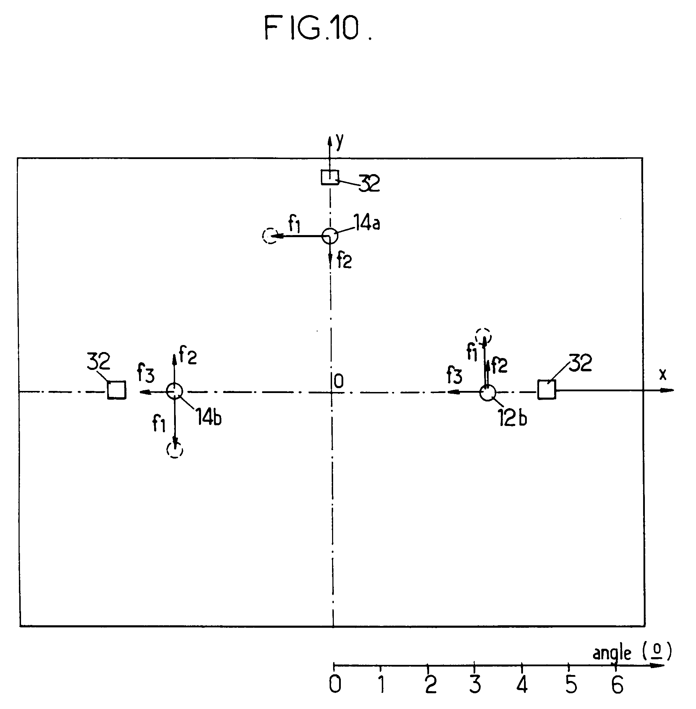

La figure 10 montre un exemple d'aspect de l'image fournie par la caméra 12 lorsque le chasseur et la cible sont alignés et ont une position angulaire relative, c'est-à-dire un indexage, de consigne. Sur la figure, les taches correspondant aux repères 14 et 32 sont désignées par ces chiffres et respectivement figurées par des ronds et des carrés.

Pour permettre aux circuits d'écartométrie de différencier les repères du chasseur de ceux de la cible, les repères peuvent être prévus pour donner une image différente ou comporter des moyens d'occultation périodique, permettant une identification.

L'image de la figure 10 correspond, pour un champ de 10 x 13,3° et les écartements de repères mentionnés plus haut, à une distance de 10 cm entre la caméra et le centre du motif constitué par les repères. Les écarts présentés par les repères 14 par rapport aux repères 32 permettent de mesurer la distance (par comparaison entre les taches correspondant aux repères 14 et les taches correspondant aux repères 32) et les défauts d'alignement et d'indexage.

Par exemple, si les taches représentatives des repères 14 occupent les positions représentées en tirets sur la figure 10, c'est-à-dire sont décalées par rapport aux positions centrées de vecteurs f1 de même amplitude et chacun orthogonal à la ligne passant par le centre O, cela indique un défaut d'indexage autour de l'axe optique commun de la caméra et des motifs.

Des décalages f2 parallèles entre eux, mais de sens opposé pour 14a, indiquent un défaut d'alignement dû à un basculement autour d'un axe parallèle à Ox.

Des déplacements du genre indiqué par les flèches f3 indiqueront un défaut d'alignement dans la direction orthogonale.

La mesure de ces déplacements permettra, par des formules qui tiennent compte de l'emplacement des repères sur la cible et sur le chasseur, de déterminer de façon exacte la position relative de l'un par rapport à l'autre.

On voit que le dispositif selon l'invention permet, au prix de l'adjonction de moyens qui sont très simples puisqu'ils se limitent à quelques repères et à des réflecteurs, de localiser de façon précise et jusqu'à des distances très courtes la cible et donc de résoudre le problème de l'accostage.

## Revendications

1. Dispositif de détermination de la position relative d'un véhicule chasseur (10) et d'un véhicule cible (11) comprenant, sur le chasseur, une caméra (12) de formation de l'image d'un champ de vision ayant un développement angulaire déterminé et, sur la cible, un jeu de plusieurs repères (14 ; 14a,14b) dont l'écartement est tel qu'ils sont contenus dans le champ angulaire lorsque la distance entre le chasseur et la cible est importante et que la caméra est centrée par rapport à la cible, mais qu'ils sont au moins partiellement hors du champ angulaire de vision directe de la caméra portée par le chasseur dès que la distance entre le chasseur et la cible est inférieure à une valeur déterminée,
caractérisé en ce que la cible (11) porte des moyens réflecteurs (16) qui restent entièrement dans le champ de vision, même au-dessous de ladite valeur de la distance, et sont agencés pour fournir, dans le champ de la caméra portée par le chasseur, une image desdits repères (14).

2. Dispositif selon la revendication 1,
caractérisé en ce que les moyens réflecteurs (16) comprennent une pyramide placée à distance sensiblement égale des repères (14 ; 14a,14b) ayant un nombre de faces réfléchissantes égal à celui des repères.

3. Dispositif selon la revendication 1 ou 2,
caractérisé en ce que les repères (14) sont constitués par des rétroréflecteurs.

4. Dispositif selon la revendication 1,
permettant de déterminer l'attitude relative d'un chasseur et d'une cible comprenant de plus, sur la cible, des miroirs (34) situés sensiblement aux mêmes emplacements que lesdits repères (14) et ramenant dans le champ de la caméra (12) des repères auxiliaires placés sur le chasseur.

5. Dispositif selon la revendication 4,
caractérisé en ce que les repères (14) de la cible sont placés à la base des miroirs.

6. Système de détermination de la distance et de l'attitude relative d'un chasseur et d'une cible munis d'accès d'amarrage respectifs placés suivant leur axe,
caractérisé en ce qu'il comprend deux dispositifs optiques selon l'une quelconque des revendications précédentes, décalés angulairement l'un par rapport à l'autre autour de l'axe.

7. Système selon la revendication 6,
caractérisé en ce que chacun des dispositifs comporte un repère central (14a) placé au bord de l'accès d'amarrage (26) du véhicule cible et de repères (14b) placés au bord du véhicule cible.

## Patentansprüche

1. Gerät zur Bestimmung der relativen Position eines Jagdfahrzeuges (10) und eines Zielfahrzeuges (11) mit einer Kamera (12) auf dem Jäger zur Abbildung von Bildern eines Sichtfeldes, das eine bestimmte Winkelausdehnung aufweist, und einen Satz von mehreren Markierungen (14;14a,14b) auf dem Ziel, deren Abstand so ist, daß sie in dem Winkelfeld enthalten sind, wenn der Abstand zwischen Jagdfahrzeug und Zielfahrzeug bedeutend ist und die Kamera in Bezug auf das Ziel zentriert ist, aber wobei sie mindestens teilweise außerhalb des direkten Sichtwinkelfeldes der Kamera auf dem Jagdfahrzeug liegen, sobald der Abstand zwischen dem Jäger und dem Ziel kleiner ist, als ein bestimmter Wert,
**dadurch gekennzeichnet, daß** das Ziel (11) eine Reflektionseinrichtung (16) umfaßt, die vollständig in dem Sichtfeld liegt, selbst unterhalb des genannten Wertes des Abstandes, und die geeignet ist, in dem Feld der Kamera, die von dem Jäger getragen wird, ein Bild der Markierungen (14) zu liefern.

2. Gerät nach Anspruch 1, **dadurch gekennzeichnet, daß** die Reflektiereinrichtung (16) eine Pyramide umfaßt, die in einem im wesentlichen gleichen Abstand zu den Markierungen (14;14a,14b) angeordnet ist und eine Azahl von reflektierenden Flächen gleich derjenigen der Markierungen aufweist.

3. Gerät nach Anspruch 1 oder 2, **dadurch gekennzeichnet, daß** die Markierungen (14) Retroreflektoren umfassen.

4. Gerät nach Anspruch 1, die eine Bestimmung der relativen Höhe eines Jägers und eines Zieles erlaubt, und weiterhin auf dem Ziel Spiegel (34) umfaßt, die im wesentlichen an den gleichen Stellen wie die Markierungen (14) angeordnet sind und in dem Feld der Kamera (12) Hilfsmarkierungen mit sich bringen, die auf dem Jäger angeordnet sind.

5. Gerät nach Anspruch 4, **dadurch gekennzeichnet, daß** die Markierung (14) des Zieles am Fuße der Spiegel angeordnet sind.

6. System zur Bestimmung des Abstandes und der relativen Höhe eines Jägers und eines Zieles, das mit einem Befestigungszugang versehen ist, der entlang ihrer Achse angeordnet ist, **dadurch gekennzeichnet, daß** es zwei optische Einrichtungen gemäß einem der vorangegangenen Ansprüche umfaßt, die in Bezug zueinander um die Achse winkelverschoben sind.

7. System nach Anspruch 6, **dadurch gekennzeichnet, daß** jede der Einrichtungen eine Mittelmarkierung (14) aufweist, die am Rand des Befestigungszuganges (26) des Zielfahrzeuges angeordnet ist und Markierungen (14b), die am Rand des Zielfahrzeuges angeordnet sind.

## Claims

1. A device for determining the relative position of a chaser vehicle (10) and a target vehicle (11) comprising, on the chaser vehicle, a camera (12) for forming the image of a field of view having a determined angular development and, on the target, a set of a plurality of markers (14; 14a, 14b) whose mutual spacing is such that they are contained in the angular field when the distance between the chaser and the target is large and the camera is centered relative to the target, but such that they are at least partially outside the angular field of direct view of the camera carried by the chaser as soon as the distance beween the chaser and the target is smaller than a determined value,
characterized in that the target (11) carries reflector means (16) which remain entirely in the field of view, even below said value of the distance, and which are arranged to provide, in the field of the camera carried by the chaser, an image of said markers (14).

2. A device according to claim 1,
characterized in that the reflector means (16) comprise a pyramid placed at substantially equal distances from the markers (14; 14a, 14b), having a number of reflecting faces which is equal to that of the markers.

3. A device according to claim 1 or 2,
characterized in that the markers (14) are constituted by retroreflectors.

4. A device according ot claim 1,
enabling the relative attitude of a chaser and a target to be determined, further comprising, on the target, mirrors (34) situated substantially at the same locations as said markers (14) and bringing auxiliary markers placed on the chaser into the field of the camera (12).

5. A device according to claim 4,
characterized in that the markers (14) of the target are placed at the base of the mirrors.

6. A system for determining the relative attitude and distance of a chaser and a target which are provided with respective docking ports placed along their axis,
characterized in that it comprises two optical devices according to any one of the preceding claims and angularly offset relative to each other about the axis.

7. A system according to claim 6,
characterized in that each of the devices comprises a central marker (14a) placed at the edge of the docking port (26) of the target vehicle, and markers (14b) placed at the edge of the target vehicle.
